# EUROPÄISCHE PATENTANMELDUNG

(11) **EP 2 517 847 A2**
(43) Veröffentlichungstag der Anmeldung: **31.10.2012**
(21) Anmeldenummer: 12157406.5
(22) Anmeldetag: 29.02.2012
(51) Int. Cl.: B27B 17/00, B25B 11/00

(54) **Vorrichtung zum Fixieren eines Werkstückes durch einen Bediener**

(30) Priorität: 26.04.2011 DE 102011017506
(71) Anmelder: HILTI Aktiengesellschaft, 9494 Schaan (LI)
(72) Erfinder: Günther, Joachim, 86916 Kaufering (DE); Ljubojevic, Dragomir, 9000 St. Gallen (CH); Melzer, Bert, 28816 Stuhr (DE)

(57) **Zusammenfassung**

Vorrichtung (1) zum Fixieren eines Werkstückes (2), das auf einem Untergrund (3) positioniert ist, während der Bearbeitung des Werkstückes (2) mit einem handgeführten Werkzeuggerät durch einen Bediener, gekennzeichnet durch ein Trittelement (4), das eine Trittfläche (10) zur Einleitung einer Haltekraft durch den Bediener und eine Auflagefläche (11) zur Auflage der Vorrichtung (1) auf das Werkstück (2) aufweist.

## Beschreibung

Die vorliegende Erfindung betrifft eine Vorrichtung zum Fixieren eines Werkstückes durch einen Bediener gemäß dem Oberbegriff des Anspruchs 1.

Zum Ablängen von länglichen Werkstücken werden handgeführte Werkzeuggeräte eingesetzt. Unter dem Begriff "handgeführte Werkzeuggeräte" werden im Folgenden Werkzeuggeräte, wie beispielsweise Trennschleifer und Kettensägen, zusammengefasst, die ein Bediener während der Bearbeitung mit der Hand führt. Bekannt sind elektrische und benzingetriebene handgeführte Werkzeuggeräte. Die Geräteauswahl wird unter anderem vom Material des abzulängenden Werkstückes beeinflusst. Bei Holzstämmen und -balken werden vor allem Kettensägen, bei Bordsteinen und Stahlrohren vor allem Trennschleifer eingesetzt.

In der Praxis sind die abzulängenden Werkstücke während der Bearbeitung nicht eingespannt, sondern werden vom Bediener fixiert, indem er seinen Fuß von oben auf das Werkstück stellt. Diese Art der Fixierung birgt ein Risiko für Fußverletzungen, da sich der Fuß in der Nähe des Trennschnittes und damit des sich bewegenden Bearbeitungswerkzeuges befindet. Das Risiko von Fußverletzungen ist zu Beginn und am Ende des Trennschnittes besonders hoch, da sich das Bearbeitungswerkzeug unkontrolliert bewegen kann.

Die Aufgabe der vorliegenden Erfindung besteht darin, das Risiko von Fußverletzungen beim Ablängen von länglichen Werkstücken mit handgeführten Werkzeuggeräten zu reduzieren.

Diese Aufgabe wird bei der eingangs genannten Vorrichtung erfindungsgemäß durch die Merkmale des unabhängigen Anspruchs 1 gelöst. Vorteilhafte Weiterbildungen sind in den abhängigen Ansprüchen angegeben.

Erfindungsgemäß ist ein Trittelement vorgesehen, das eine Trittfläche zur Einleitung einer Haltekraft durch den Bediener und eine Auflagefläche zur Auflage der Vorrichtung auf das Werkstück aufweist. Die Trittfläche sorgt dafür, dass die Haltekraft gleichmäßig in das Werkstück eingeleitet wird. Außerdem wird die Gefahr reduziert, dass der Fuß des Bedieners während der Bearbeitung abrutscht. Dabei ist die Trittfläche bevorzugt aus einem rutschhemmenden Material ausgebildet oder mit einer Beschichtung aus einem rutschhemmenden Material versehen. Die Verwendung eines rutschhemmenden Materials reduziert die Gefahr, dass der Fuß des Bedieners während der Fixierung von der Trittfläche abrutscht.

Bevorzugt ist das Trittelement über ein Verbindungselement mit einem Rückhalteelement, das eine Anlagefläche zur Anlage der Fixiervorrichtung am Werkstück aufweist, verbunden. Das Rückhalteelement sorgt dafür, dass die Fixiervorrichtung neben der Auflagefläche des Trittelementes mit einer weiteren Anlagefläche am Werkstück anliegt. Durch die weitere Anlagefläche am Werkstück wird verhindert, dass das zu fixierende Werkstück beim Einleiten der Haltekraft unter der Fixiervorrichtung wegrollt oder wegrutscht.

Besonders bevorzugt ist das Rückhalteelement zum Trittelement verstellbar ausgebildet. Dabei sind die Position der Anlagefläche des Rückhalteelementes und/oder ein Winkel zwischen dem Trittelement und Rückhalteelement verstellbar. Durch die Verstellbarkeit des Rückhalteelementes kann die Fixiervorrichtung an verschiedene Werkstücke angepasst werden.

In einer bevorzugten Ausführungsform ist das Trittelement über ein Verbindungselement mit einem Abstützelement, mit dem die Vorrichtung am Untergrund abstützbar ist, verbunden. Das Abstützelement sorgt dafür, dass die Fixiervorrichtung am Untergrund verankert ist und verhindert ein Verschieben oder Wegrutschen des zu fixierenden Werkstückes.

Dabei besteht das Abstützelement besonders bevorzugt aus einem, dem Trittelement zugewandten ersten Abschnitt und einem, dem Untergrund zugewandten zweiten Abschnitt, wobei der erste und zweite Abschnitt zueinander über eine Längenverstelleinrichtung verstellbar sind. Durch die Längenverstellung kann die Fixiervorrichtung an verschiedene Werkstücke angepasst werden. Außerdem kann das Trittelement mit Hilfe der Längenverstelleinrichtung so ausgerichtet werden, dass die Trittfläche um einen Neigungswinkel zu einer Horizontalebene geneigt ist. Die Neigung der Trittfläche verbessert die Ergonomie für den Bediener. Ergonomisch günstig sind Neigungswinkel von ca. 5° bis ca. 20°.

In einer bevorzugten Ausführungsform sind das Trittelement und das Abstützelement unter einem Winkel von jeweils 110° bis 120° zum Rückhalteelement angeordnet. Diese Ausführungsform eignet sich vor allem zur Fixierung von Werkstücken mit einem kreisförmigen oder abgerundeten Querschnitt. Dabei erfolgen die Anpassung der Fixiervorrichtung an verschiedene Durchmesser und die Einstellung des Neigungswinkels der Trittfläche mit Hilfe der Längeneinstelleinrichtung des Abstützelementes.

In einer alternativen bevorzugten Ausführungsform sind das Trittelement und das Abstützelement unter einem Winkel von 90° zum Rückhalteelement angeordnet und die Trittfläche ist um einen Neigungswinkel von ca. 5° bis 20° zur Auflagefläche geneigt. Diese Ausführungsform eignet sich vor allem zur Fixierung von rechteckigen Werkstücken. Dabei erfolgen die Anpassung der Fixiervorrichtung an verschiedene Höhen und Breiten der Werkstücke über die Längenverstellung des Abstützelementes und die Verstellbarkeit des Rückhalteelementes.

In einer bevorzugten Ausführungsform ist eine Schutzeinrichtung vorgesehen, die mit dem Trittelement verbunden und auf der dem handgeführten Werkzeuggerät während der Bearbeitung zugeordneten Seite des Trittelementes angeordnet ist. Die Schutzeinrichtung reduziert die Gefahr von Fußverletzungen für den Bediener, da der Bearbeitungsbereich des handgeführten Werkzeuggerätes durch die Schutzeinrichtung abgeschirmt ist.

In einer ersten Variante sind das Trittelement und die Schutzeinrichtung unlösbar miteinander verbunden. Die unlösbare Verbindung reduziert die Möglichkeit von fehlerhaften Anwendungen durch den Bediener. Außerdem ist sichergestellt, dass die Schutzeinrichtung vom Bediener nicht demontiert wird. Um die Fixiervorrichtung für Rechts- und Linkshänder nutzbar zu machen, ist bevorzugt auf beiden Seiten des Trittelementes eine Schutzeinrichtung vorgesehen.

In einer zweiten Variante sind das Trittelement und die Schutzeinrichtung lösbar miteinander verbunden, wobei die Schutzeinrichtung auf der rechten und/oder der linken Seite des Tritt-elementes mit dem Trittelement verbindbar ist. Die lösbare Verbindung hat den Vorteil, dass die Fixiervorrichtung von Rechts- und Linkshändern benutzt werden kann und die Schutzeinrichtung vom Bediener auf der dem handgeführten Werkzeuggerät während der Bearbeitung zugeordneten Seite des Trittelementes angeordnet werden kann.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fign. 1A-C: eine erste Ausführungsform einer erfindungsgemäßen Fixiervorrichtung während der Fixierung eines rohrförmigen Werkstückes auf einem Untergrund bestehend aus einem Trittelement, Abstützelement und Rückhalteelement (Fig. 1A) sowie in einer vergrößerten Darstellung ohne das zu fixierende Werkstück in einer Vorderansicht (Fig. 1 B) und in einer Rückansicht auf das Abstützelement (Fig. 1 C);
- Fign. 2A, B: die Fixiervorrichtung der Fign. 1A-C in einer Seitenansicht während der Fixierung eines ersten rohrförmigen Werkstückes mit einem ersten Rohrdurchmesser (Fig. 2A) und eines zweiten rohrförmigen Werkstückes mit einem zweiten, größeren Rohrdurchmesser (Fig. 2B);
- Fign. 3A, B: eine zweite Ausführungsform einer erfindungsgemäßen Fixiervorrichtung während der Fixierung eines rechteckigen Werkstückes auf einem Untergrund (Fig. 3A) und in einer vergrößerten Darstellung ohne das zu fixierende Werkstück (Fig. 3B);
- Fign. 4A, B: die Fixiervorrichtung der Fign. 3A, B in einer Seitenansicht während der Fixierung eines ersten rechteckigen Werkstückes mit einer ersten Höhe und Breite (Fig. 4A) und eines zweiten rechteckigen Werkstückes mit einer zweiten Höhe und Breite (Fig. 4B); und
- Fig. 5: eine dritte Ausführungsform einer erfindungsgemäßen Fixiervorrichtung während der Fixierung eines schweren, rechteckigen Werkstückes.

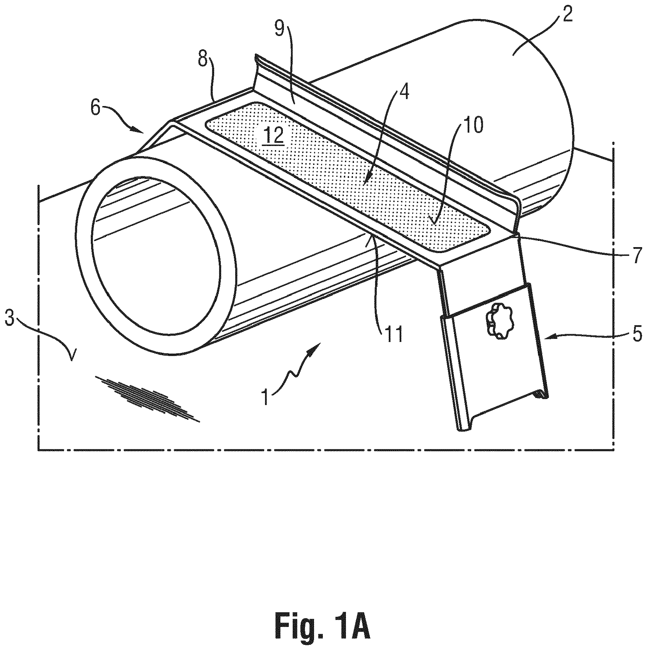

**Fign. 1A-C** zeigen eine erste Ausführungsform einer erfindungsgemäßen Vorrichtung **1** zum Fixieren eines Werkstückes auf einem Untergrund während der Bearbeitung des Werkstückes mit einem handgeführten Werkzeuggerät durch einen Bediener.

Fig. 1A zeigt die Fixiervorrichtung 1 während der Fixierung eines rohrförmigen Werkstückes **2** auf einem Untergrund **3**. Bei Werkstücken mit einem kreisförmigen oder abgerundeten Querschnitt besteht die Gefahr, dass das Werkstück während der Bearbeitung auf dem Untergrund 3 wegrollt. Die Fixiervorrichtung 1 hat die Aufgabe, ein Wegrollen und Verschieben der Werkstücke 2 auf dem Untergrund 3 zu verhindern.

Die Fixiervorrichtung 1 besteht aus einem Trittelement **4,** einem Abstützelement **5** und einem Rückhalteelement **6.** Dabei sind das Trittelement 4 und Abstützelement 5 über ein erstes Verbindungselement **7** und das Trittelement 4 und Rückhalteelement 6 über ein zweites Verbindungselement **8** verbunden.

Um den Fuß des Bedieners während der Bearbeitung zu schützen, weist die Fixiervorrichtung 1 eine Schutzeinrichtung **9** auf, die mit dem Trittelement 4 verbunden ist und die auf der dem handgeführten Werkzeuggerät während der Bearbeitung zugeordneten Seite des Tritt-elementes 4 angeordnet ist. Der Trennschnitt erfolgt auf der Seite der Schutzeinrichtung 9, so dass die Fixiervorrichtung 1 für einen Rechtshänder geeignet und für einen Linkshänder ungeeignet ist. Damit die Fixiervorrichtung 1 auch von Linkshändern benutzt werden kann, kann beispielsweise auf beiden Seiten des Trittelementes 4 eine Schutzeinrichtung 9 vorgesehen sein.

Das Trittelement 4 weist eine Trittfläche **10,** über die der Bediener eine Haltekraft in die Fixiervorrichtung 1 einleitet, und eine der Trittfläche 10 gegenüberliegende Auflagefläche **11** zur Auflage der Fixiervorrichtung 1 auf dem Werkstück 2 auf. Die Trittfläche 10 ist mit einer Beschichtung **12** aus einem rutschhemmenden Material versehen oder alternativ aus einem rutschhemmenden Material ausgebildet.

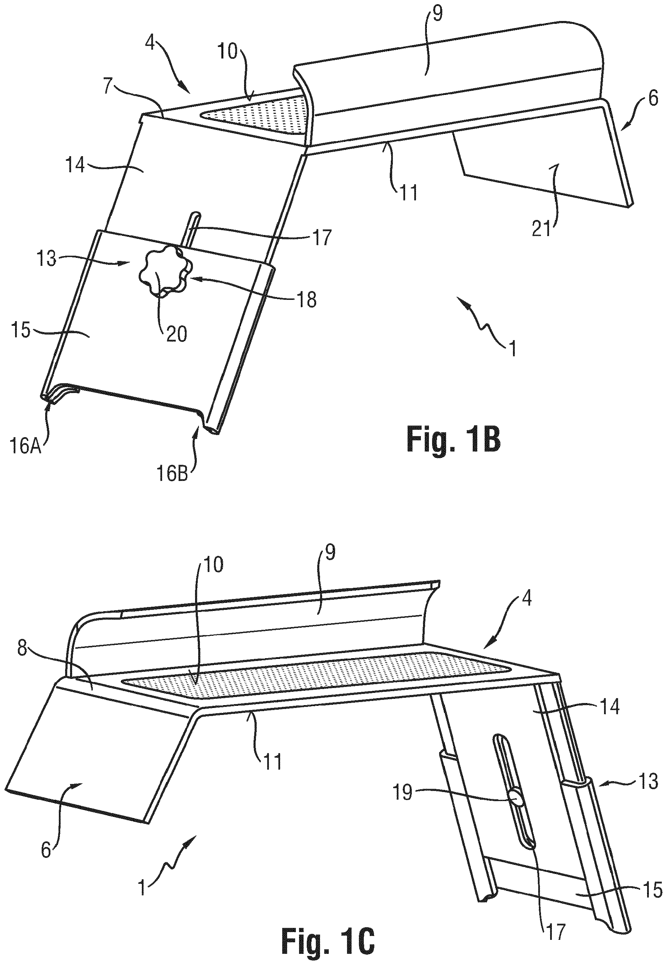

Fig. 1B und 1C zeigen die Fixiervorrichtung 1 in einer Vorderansicht (Fig. 1B) und einer Rückansicht (Fig. 1C) auf das Abstützelement 5 ohne das zu fixierende rohrförmige Werkstück. Das Abstützelement 5 ist mittels einer Längenverstelleinrichtung **13** zwischen einer minimalen und maximalen Länge verstellbar ausgebildet und besteht aus einem, dem Tritt-element 4 zugewandten ersten Abschnitt **14** und einem zweiten Abschnitt **15,** mit dem die Fixiervorrichtung 1 am Untergrund 3 abgestützt wird. Der zweite Abschnitt 15 weist an der dem Untergrund 3 zugewandten Seite einen ersten und zweiten Standfuß **16A, 16B** auf. Abhängig vom Untergrund 3 kann der zweite Abschnitt 15 unterschiedliche Standfüße 16A, 16B aufweisen, um die Fixiervorrichtung 1 sicher auf dem Untergrund 3 zu fixieren.

Der erste und zweite Abschnitt 14, 15 des Abstützelementes 5 sind zueinander verstellbar. Im ersten Abschnitt 14 ist eine Langbohrung **17** vorgesehen, in der eine Feststelleinrichtung **18** geführt ist. Die Feststelleinrichtung 18 besteht aus einer Schraube **19** und einer Mutter **20.** Bei festgezogener Mutter 20 sind der erste und zweite Abschnitt 14, 15 fest miteinander verbunden und bei loser Mutter 20 ist der zweite Abschnitt 15 verstellbar.

Das Rückhalteelement 6 dient dazu, das Werkstück 2 während der Bearbeitung sicher zu fixieren und ein Wegrutschen des Werkstückes 2 zu verhindern. Das Rückhalteelement 6 weist eine Anlagefläche **21** auf, mit der die Fixiervorrichtung 1 am Werkstück 2 anliegt. Rohrförmige Werkstücke werden über die Auflagefläche 11 des Trittelementes 4 und die Anlagefläche 21 des Rückhalteelementes 6 sicher fixiert.

Das Trittelement 4, der erste Abschnitt 14 des Abstützelementes 5, das Rückhalteelement 6 und die Schutzeinrichtung 9 sind in der gezeigten Ausführungsform der Fixiervorrichtung 1 monolithisch als Blech-Biegeteil ohne Verstellmöglichkeiten ausgebildet. Das Trittelement 4, der erste Abschnitt 14 des Abstützelementes 5 und das Rückhalteelement 6 sind so zueinander angeordnet, dass die Fixiervorrichtung 1 für ein vorgegebenes Spektrum an rohrförmigen Werkstücken zur Fixierung geeignet ist. Die Anpassung der Fixiervorrichtung 1 an verschiedene Rohrdurchmesser erfolgt mit der Längenverstelleinrichtung 13 des Abstützelementes 5.

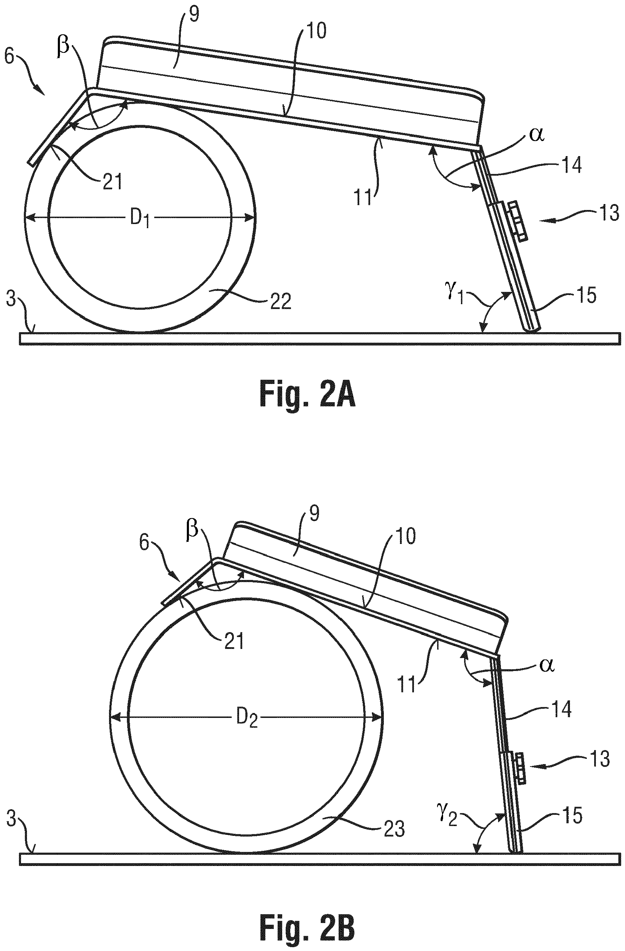

**Fign. 2A****, B** zeigen die Fixiervorrichtung 1 in einer Seitenansicht während der Bearbeitung eines ersten rohrförmigen Werkstückes **22** mit einem ersten Rohrdurchmesser **D₁** von 30 cm (Fig. 2A) und eines zweiten rohrförmigen Werkstückes **23** mit einem zweiten Rohrdurchmesser **D₂** von 50 cm (Fig. 2B).

Um rohrförmige Werkstücke mit einem Rohrdurchmesser von ca. 30 cm bis ca. 50 cm bearbeiten zu können, eignen sich beispielsweise Fixiervorrichtungen mit einem Winkel α von ca. 115° zwischen dem Trittelement 4 und Abstützelement 5 und einem Winkel β von ca. 120° zwischen dem Trittelement 4 und Rückhalteelement 6.

Da die Winkel α, β zwischen Trittelement 4 und Abstützelement 5 und zwischen Trittelement 4 und Rückhalteelement 6 nicht verstellbar sind, erfolgt die Anpassung der Fixiervorrichtung 1 an die Rohre 22, 23 über die Längenverstelleinrichtung 13. Die Länge des Abstützelementes 5 ist so eingestellt, dass das Trittelement 4 und das Rückhalteelement 6 jeweils am Rohr 22, 23 anliegen und die Fixiervorrichtung 1 über die Standfüße 16A, 16B am Untergrund 3 abgestützt ist.

Ergonomisch günstig ist, wenn die Trittfläche 10 nicht horizontal angeordnet, sondern unter einem Neigungswinkel zur Horizontalebene geneigt ist. Die Neigung der Trittfläche 10 verbessert die Ergonomie für den Bediener bei der Bearbeitung. Als ergonomisch günstig haben sich Neigungswinkel von ca. 5° bis 20° herausgestellt. Der Bediener kann den Neigungswinkel der Trittfläche 10 über die Längenverstelleinrichtung 13 des Abstützelementes 5 einstellen und an seine Bedürfnisse anpassen.

Die Neigung der Trittfläche 10 ist bei der Fixierung der Werkstücke 22, 23 unterschiedlich eingestellt. Dies zeigt sich darin, dass der Winkel γ zwischen dem Abstützelement 5 und Untergrund 3 verschieden ist. Der Winkel γ₁ bei der Fixierung des ersten Werkstückes 22 ist kleiner als der Winkel γ₂ bei der Fixierung des zweiten Werkstückes 23. [Warum ist das so? Ist es ergonomisch günstiger, wenn die Trittfläche mit zunehmendem Rohrdurchmesser stärker geneigt ist?]

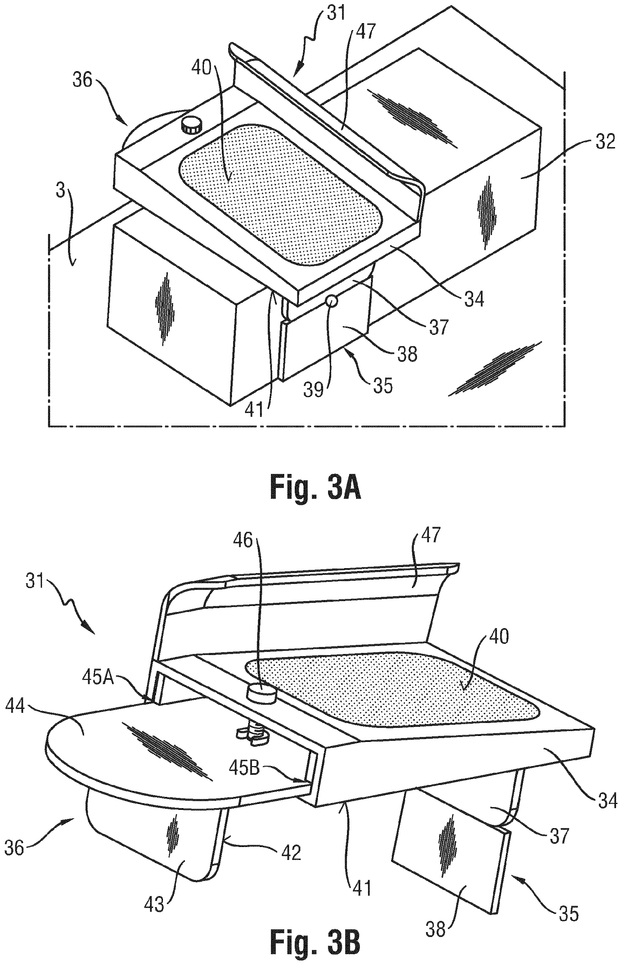

**Fign. 3A****, B** zeigen eine zweite Ausführungsform einer erfindungsgemäßen Vorrichtung **31** zum Fixieren eines Werkstückes auf dem Untergrund 3 während der Bearbeitung durch einen Bediener.

Fig. 3A zeigt die Fixiervorrichtung 31 während der Fixierung eines rechteckigen Werkstückes **32,** das in Form eines Porenbetonsteines ausgebildet ist. Bei rechteckigen Werkstücken ist die Gefahr, dass das Werkstück auf dem Untergrund 3 wegrollt, aufgrund der größeren Auflage am Untergrund 3 geringer als bei Werkstücken mit einem kreisförmigen oder abgerundeten Querschnitt. Dennoch besteht vor allem am Beginn und Ende des Trennschnittes durch unkontrollierte Bewegungen des Bearbeitungswerkzeuges eine Verletzungsgefahr für den Bediener. Je leichter das Werkstück ist, umso größer ist die Gefahr, dass das Werkstück bei der Bearbeitung auf dem Untergrund wegrutscht.

Die Fixiervorrichtung 31 besteht aus einem Trittelement **34,** einem Abstützelement **35** und einem Rückhalteelement **36.** Um Werkstücke 32 mit unterschiedlicher Höhe und Breite bearbeiten zu können, sind das Abstützelement 35 und das Rückhalteelement 36 verstellbar ausgebildet. Das Abstützelement 35 besteht aus einem ersten und zweiten Abschnitt **37, 38,** die mittels einer Längenverstelleinrichtung **39** zueinander verstellbar sind. Die Fixiervorrichtung 31 wird über die verstellbare Länge des Abstützelementes 35 an die Höhe des Werkstückes 32 angepasst.

Das Trittelement 34 weist wie das Trittelement 4 der Fixiervorrichtung 1 eine Trittfläche **40** und eine Auflagefläche **41** auf. Die Trittfläche 40 und die Auflagefläche 41 sind jedoch nicht parallel zueinander angeordnet, sondern die Trittfläche 40 ist unter einem Neigungswinkel zur Auflagefläche 41 geneigt. Die Neigung der Trittfläche 40 verbessert die Ergonomie für den Bediener bei der Fixierung. Als ergonomisch günstig haben sich Neigungswinkel von ca. 5° bis 20° herausgestellt.

Fig. 3B zeigt die Fixiervorrichtung 31 in einer vergrößerten, dreidimensionalen Ansicht auf das Rückhalteelement 36 ohne das zu fixierende, rechteckige Werkstück 32. Das Rückhalteelement 36 sorgt dafür, dass die Fixiervorrichtung 31 neben der Auflagefläche 41 des Trittelementes 34 mit einer weiteren Anlagefläche **42** am Werkstück 32 anliegt. Die Anlagefläche 42 ist unter einem Winkel von 90° zur Auflagefläche 41 des Trittelementes 34 ausgerichtet.

Das Rückhalteelement 36 besteht aus einem Anlageelement **43** mit der Anlagefläche 42 und einem Verschiebeelement **44.** Das Verschiebeelement 44 ist in zwei Führungsnuten **45A, 45B** geführt, die zwischen der Trittfläche 40 und der Auflagefläche 41 des Trittelementes 34 befestigt sind. Die Position des Verschiebeelementes 44 ist mittels einer Feststelleinrichtung **46** am Trittelement 34 bzw. relativ zum Trittelement 34 feststellbar.

Die Fixiervorrichtung 31 wird über die einstellbare Position der Anlagefläche 42 an die Breite des Werkstückes 32 angepasst. Die Abmessungen des Abstützelementes 35 und des Rückhalteelementes 36 sind so gewählt, dass sich die Fixiervorrichtung 31 für ein festgelegtes Spektrum rechteckiger Werkstücke 32 eignet. Um viereckige Werkstücke, die einen nichtrechteckigen Querschnitt aufweisen, mit Hilfe der Fixiervorrichtung 31 fixieren zu können, kann die Verstelleinrichtung des Rückhalteelementes 36 durch eine Winkeleinstelleinrichtung ergänzt werden.

Die Fixiervorrichtung 31 weist eine Schutzeinrichtung **47** auf, die mit dem Trittelement 34 lösbar verbunden ist und die in der in Fig. 3A gezeigten Ausführung auf der dem handgeführten Werkzeuggerät während der Bearbeitung zugeordneten Seite des Trittelementes 34 angeordnet ist. Die Schutzeinrichtung 47 ist beispielsweise über eine Schraubverbindung mit dem Trittelement 34 verbunden und kann auf beiden Seiten des Trittelementes 34 angeschraubt werden. Der Bediener kann die Fixiervorrichtung 31 vor dem Einsatz daran anpassen, ob er Rechtshänder oder Linkshänder ist.

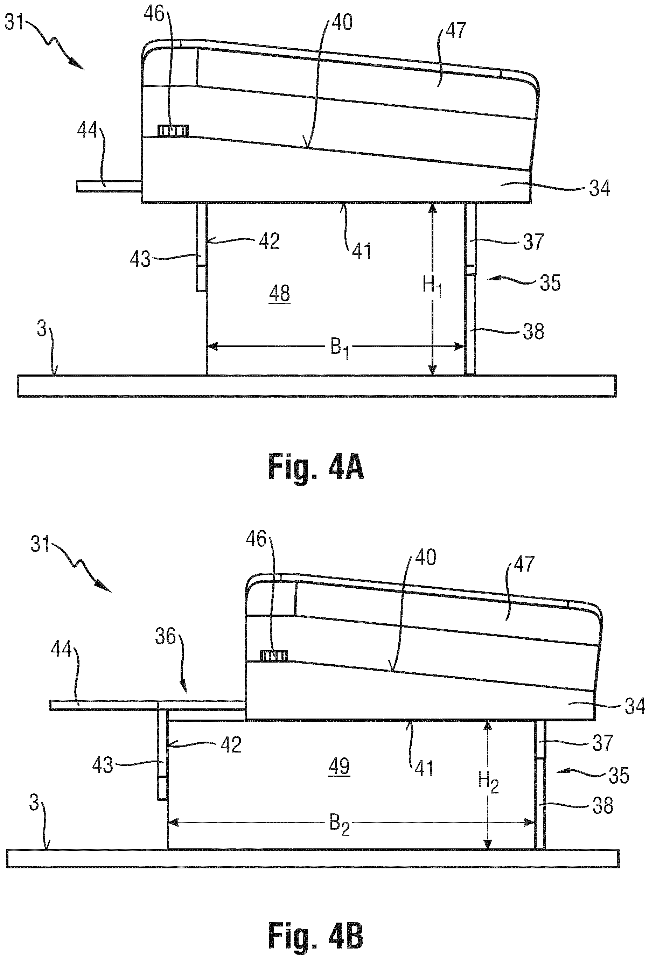

**Fign. 4A****, B** zeigen die Fixiervorrichtung 31 in einer Seitenansicht während der Bearbeitung eines ersten rechteckigen Werkstückes **48** mit einer ersten Höhe **H₁** und einer ersten Breite **B₁** (Fig. 4A) und eines zweiten rechteckigen Werkstückes **49** mit einer zweiten Höhe **H₂** und einer zweiten Breite **B₂** (Fig. 4B). Dabei ist das erste Werkstück 48 höher als das zweite Werkstück 49 (H₁ > H₂) und das zweite Werkstück 49 breiter als das erste Werkstück 48 (B₂ > B₁).

Die Länge des Abstützelementes 35 ist so eingestellt, dass die Auflagefläche 41 des Tritt-elementes 34 auf dem Werkstück 48, 49 aufliegt und die Fixiervorrichtung 31 über das Abstützelement 35 am Untergrund 3 abgestützt ist. Die Position des Rückhalteelementes 36 ist so eingestellt, dass die Anlagefläche 42 jeweils am Werkstück 48, 49 anliegt. Das Rückhalteelement 36 verhindert, dass das zu fixierende Werkstück 48, 49 beim Einleiten der Haltekraft unter dem Trittelement 34 wegrutscht oder verschoben wird.

Die Fixiervorrichtung 31 eignet sich für Werkstücke mit einer Höhe bis ca. 50 cm. Werkstücke mit einer größeren Höhe eignen sich nicht für diese Form der Fixierung, da die Höhe, in der sich die Trittfläche 40 befindet, keine ergonomische Bedienung durch den Bediener zulässt.

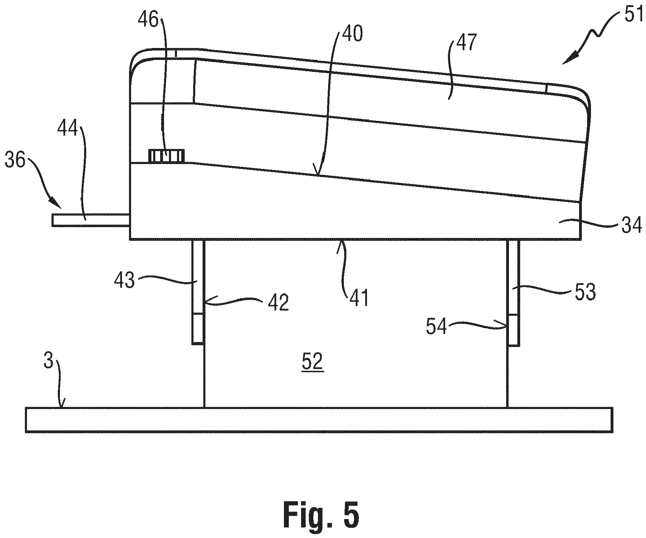

**Fig. 5** zeigt eine dritte Ausführungsform einer erfindungsgemäßen Vorrichtung **51** zum Fixieren eines Werkstückes **52** auf dem Untergrund 3. Bei sehr schweren Werkstücken, wie beispielsweise Kantsteinen für Bordsteine, ist die Gefahr, dass das Werkstück 52 während der Bearbeitung wegrutscht, aufgrund des hohen Gewichtes sehr gering. In diesem Fall ist eine Abstützung und Verankerung der Fixiervorrichtung 51 am Untergrund 3 nicht notwendig. Die Fixiervorrichtung 51 unterscheidet sich durch die Ausgestaltung des Abstützelementes von der Fixiervorrichtung 31.

Die Fixiervorrichtung 51 besteht aus dem Trittelement 34, dem Rückhalteelement 36 und einem weiteren Anlageelement **53** mit einer weiteren Anlagefläche **54.** Um Werkstücke mit unterschiedlicher Breite bearbeiten zu können, ist das Rückhalteelement 36 verstellbar ausgebildet.

Das Werkstück 52 ist zwischen der Anlagefläche 42 des Rückhalteelementes 36 und der Anlagefläche 54 des Anlageelementes 53 geklemmt. Dabei bedeutet der Begriff "Klemmen", dass zwischen den Anlageflächen 42, 54 und dem Werkstück 52 möglichst wenig Spiel besteht. Durch diese Anordnung wird verhindert, dass die Fixiervorrichtung 51 durch unkontrollierte Bewegungen des Bearbeitungswerkzeuges während der Bearbeitung relativ zum Werkstück 52 verschoben wird.

## Patentansprüche

1. Vorrichtung (1; 31; 51) zum Fixieren eines Werkstückes (2, 22, 23; 32, 48, 49; 52), das auf einem Untergrund (3) positioniert ist, während der Bearbeitung des Werkstückes (2, 22, 23; 32, 48, 49; 52) mit einem handgeführten Werkzeuggerät durch einen Bediener, bestehend aus einem Trittelement (4; 34), das eine Trittfläche (10; 40) zur Einleitung einer Haltekraft durch den Bediener und eine Auflagefläche (11; 41) zur Auflage der Vorrichtung (1; 31; 51) auf das Werkstück (2, 22, 23; 32, 48, 49; 52) aufweist.

2. Vorrichtung nach Anspruch 1, **dadurch gekennzeichnet, dass** das Trittelement (4; 34) über ein Verbindungselement (8) mit einem Rückhalteelement (6; 36), das eine Anlagefläche (21; 42) zur Anlage der Vorrichtung (1; 31; 51) am Werkstück (2, 22, 23; 32, 48, 49; 52) aufweist, verbunden ist.

3. Vorrichtung nach Anspruch 2, **dadurch gekennzeichnet, dass** das Rückhalteelement (36) zum Trittelement (34) verstellbar ausgebildet ist.

4. Vorrichtung nach einem der Ansprüche 1 bis 3, **dadurch gekennzeichnet, dass** das Tritt-element (4; 34) über ein Verbindungselement (7) mit einem Abstützelement (5; 35), mit dem die Vorrichtung (31; 51) am Untergrund (3) abstützbar ist, verbunden ist.

5. Vorrichtung nach Anspruch 4, **dadurch gekennzeichnet, dass** das Abstützelement (5; 35) aus einem, dem Trittelement (4; 34) zugewandten ersten Abschnitt (14; 37) und einem, dem Untergrund (3) zugewandten zweiten Abschnitt (15; 38) besteht, wobei der erste und zweite Abschnitt (14, 15; 37, 38) über eine Längenverstelleinrichtung (13; 39) zueinander verstellbar sind.

6. Vorrichtung nach Anspruch 5, **dadurch gekennzeichnet, dass** das Trittelement (4) und das Abstützelement (5) unter einem Winkel (β, α) von 110° bis 120° zum Rückhalteelement (6) angeordnet sind.

7. Vorrichtung nach Anspruch 5, **dadurch gekennzeichnet, dass** das Trittelement (34) und das Abstützelement (35) unter einem Winkel (β, α) von 90° zum Rückhalteelement (36) angeordnet sind und die Trittfläche (40) um einen Neigungswinkel von 5° bis 20° zur Auflagefläche (41) geneigt ist.

8. Vorrichtung nach einem der Ansprüche 1 bis 7, **dadurch gekennzeichnet, dass** eine Schutzeinrichtung (9; 47) vorgesehen ist, die mit dem Trittelement (4; 34) verbunden und auf der dem handgeführten Werkzeuggerät während der Bearbeitung zugeordneten Seite des Trittelementes (4; 34) angeordnet ist.

9. Vorrichtung nach Anspruch 8, **dadurch gekennzeichnet, dass** das Trittelement (4) und die Schutzeinrichtung (9) unlösbar verbunden sind.

10. Vorrichtung nach Anspruch 8, **dadurch gekennzeichnet, dass** das Trittelement (34) und die Schutzeinrichtung (47) lösbar verbunden sind, wobei die Schutzeinrichtung (47) auf der rechten und/oder der linken Seite des Trittelementes (34) mit dem Trittelement (34) verbindbar ist.
